# EUROPEAN PATENT SPECIFICATION

(11) **EP 4 197 688 B1**
(45) Date of publication and mention of the grant of the patent: **04.03.2026**
(21) Application number: 21871939.1
(22) Date of filing: 05.07.2021
(51) Int. Cl.: B23K 26/356, B23K 26/0622, B23K 26/082, B23K 103/10, B23K 103/12, B23K 103/14, B23K 103/02

(54) **LASER PROCESSING METHOD AND LASER PROCESSING DEVICE**
LASERBEARBEITUNGSVERFAHREN UND LASERBEARBEITUNGSVORRICHTUNG
PROCÉDÉ DE TRAITEMENT AU LASER ET DISPOSITIF DE TRAITEMENT AU LASER

(30) Priority: 24.09.2020 JP 2020159829
(43) Date of publication of application: 21.06.2023
(73) Proprietor: Hamamatsu Photonics K.K., Hamamatsu-shi, Shizuoka 435-8558 (JP)
(72) Inventor: KABEYA, Yuki, Hamamatsu-shi, Shizuoka 435-8558 (JP); KURITA, Takashi, Hamamatsu-shi, Shizuoka 435-8558 (JP); YOSHIMURA, Ryo, Hamamatsu-shi, Shizuoka 435-8558 (JP); WATARI, Takeshi, Hamamatsu-shi, Shizuoka 435-8558 (JP)
(74) Representative: Grünecker Patent- und Rechtsanwälte PartG mbB
(86) International application number: PCT/JP2021/025328
(87) International publication number: WO 2022/064807

(56) References cited:
- FR-A1- 2 900 852
- JP-A- 2008 178 888
- JP-A- H08 206 869
- US-A1- 2010 249 926

## Description

### Technical Field

The present disclosure relates to a laser processing method and a laser processing apparatus.

### Background Art

A laser processing method in which a material layer is irradiated with laser light to impart compressive residual stress to an object has been described. In a laser processing method described in Patent Literature 1, an absorbing material layer is formed such that a thickness of the absorbing material layer is a predetermined thickness in order to impart a uniform compressive residual stress to an object. FR 2 900 852 A1 (on which the preamble of the appended independent claims is based) relates to a laser shock hardening method of solid material using laser beam. US 2010/249926 A1 relates to orthopedic implants and a method and system for making such orthopedic implants.

### Citation List

### Patent Literature

[Patent Literature 1] Japanese Unexamined Patent Publication No. H8-112681

### Summary of Invention

### Technical Problem

However, it is difficult to impart a uniform compressive residual stress to an object along an objective area on a surface of the object by simply forming an absorbing material layer such that a thickness of the absorbing material layer is a predetermined thickness, as in the laser processing method described in Patent Literature 1.

An object of the present disclosure is to provide a laser processing method and a laser processing apparatus capable of curbing variation in compressive residual stress imparted to an object along an objective area on a surface of the object.

### Solution to Problem

According to an aspect of the present invention, there is provided a laser processing method according to claim 1.

In this laser processing method, in the first step, the area irradiated with the laser light is expanded toward the first side, and in the second step, the area irradiated with the laser light is expanded toward the second side different from the first side. Accordingly, the compressive residual stress imparted to the object in the first step decreases toward the first side, and the compressive residual stress imparted to the object in the second step decreases toward the second side different from the first side. Therefore, for example, the variation in the compressive residual stress imparted to the object is curbed in the first step and the second step as compared with the case where the area irradiated with the laser light is expanded toward the first side in the first step and the area irradiated with the laser light is expanded toward the first side in the second step. Therefore, according to this laser processing method, it is possible to curb the variation in the compressive residual stress imparted to the object along the objective area on the surface of the object.

In the laser processing method according to the aspect of the present invention, the first side and the second side are sides opposite each other in a first direction. Accordingly, it is possible to more reliably curb the variation in the compressive residual stress imparted to the object in the first step and the second step.

In the laser processing method according to the aspect of the present invention, in the first step, a first process of moving an irradiation spot of the laser light along each of a plurality of lines extending in a second direction perpendicular to the first direction and arranged in the first direction is sequentially executed from the second side to the first side to expand the area irradiated with the laser light toward the first side, and in the second step, a second process of moving the irradiation spot of the laser light along each of a plurality of lines extending in the second direction and arranged in the first direction is sequentially executed from the first side to the second side to expand the area irradiated with the laser light toward the second side. Accordingly, in the first step, the area irradiated with the laser light can be reliably and easily expanded toward the first side, and in the second step, the area irradiated with the laser light can be reliably and easily expanded toward the second side different from the first side.

In the laser processing method according to the aspect of the present disclosure, in the first step, as the first process, a process of moving the irradiation spot of the laser light from one side to the other side in the second direction and a process of moving the irradiation spot of the laser light from the other side to the one side in the second direction may be alternately executed, and in the second step, as the second process, a process of moving the irradiation spot of the laser light from the one side to the other side in the second direction and a process of moving the irradiation spot of the laser light from the other side to the one side in the second direction may be alternately executed. Accordingly, in the first step, the area irradiated with the laser light can be efficiently expanded toward the first side, and in the second step, the area irradiated with the laser light can be efficiently expanded toward the second side different from the first side.

The laser processing method according to the aspect of the present disclosure may further include: a third step of expanding the area irradiated with the laser light toward a third side in the objective area; and a fourth step of expanding the area irradiated with the laser light toward a fourth side different from the third side in the objective area, wherein the third side and the fourth side may be sides opposite each other in a second direction perpendicular to the first direction. Accordingly, it is possible to more reliably curb the variation in the compressive residual stress imparted to the object along the objective area on the surface of the object.

In the laser processing method according to the aspect of the present disclosure, in the third step, a third process of moving the irradiation spot of the laser light along each of a plurality of lines extending in the first direction and arranged in the second direction may be sequentially executed from the fourth side to the third side to expand the area irradiated with the laser light toward the third side, and in the fourth step, a fourth process of moving the irradiation spot of the laser light along each of a plurality of lines extending in the first direction and arranged in the second direction may be sequentially executed from the third side to the fourth side to expand the area irradiated with the laser light toward the fourth side. Accordingly, in the third step, the area irradiated with the laser light can be reliably and easily expanded toward the third side, and in the fourth step, the area irradiated with the laser light can be reliably and easily expanded toward the fourth side different from the third side.

In the laser processing method according to the aspect of the present disclosure, in the third step, as the third process, a process of moving the irradiation spot of the laser light from one side to the other side in the first direction and a process of moving the irradiation spot of the laser light from the other side to the one side in the first direction may be alternately executed, and in the fourth step, as the fourth process, a process of moving the irradiation spot of the laser light from the one side to the other side in the first direction and a process of moving the irradiation spot of the laser light from the other side to the one side in the first direction may be alternately executed. Accordingly, in the third step, the area irradiated with the laser light can be efficiently expanded toward the third side, and in the fourth step, the area irradiated with the laser light can be efficiently expanded toward the fourth side different from the third side.

According to another aspect of the present invention, there is provided a laser processing apparatus according to claim 6.

According to this laser processing apparatus, as in the laser processing method described above, it is possible to curb the variation in the compressive residual stress imparted to the object along the objective area on the surface of the object.

### Advantageous Effects of Invention

According to the present disclosure, it is possible to provide a laser processing method and a laser processing apparatus capable of curbing variation in compressive residual stress imparted to an object along an objective area on a surface of the object.

### Brief Description of Drawings

FIG. 1 is a configuration diagram of a laser processing apparatus of an embodiment.
FIG. 2 is a plan view of an object for explaining a laser processing method of an embodiment.
FIG. 3 is a plan view of an object for explaining the laser processing method of the embodiment.
FIG. 4 is a plan view of an object for explaining a laser processing method of each of Comparative Example 1 and Comparative Example 2.
FIG. 5 is a plan view of an object for explaining a laser processing method of each of Comparative Example 3 and Comparative Example 4.
FIG. 6 is an image showing a two-dimensional distribution of compressive residual stress imparted by the laser processing method of each of Comparative Example 1 and Comparative Example 2.
FIG. 7 is an image showing a two-dimensional distribution of compressive residual stress imparted by the laser processing method of each of Comparative Example 3 and Comparative Example 4.
FIG. 8 is an image showing a two-dimensional distribution of compressive residual stress imparted by a laser processing method of each of Comparative Example 5 and Example 1.
FIG. 9 is an image showing a two-dimensional distribution of compressive residual stress imparted by a laser processing method of Example 2.
FIG. 10 is a graph showing the distribution of the compressive residual stress imparted by the laser processing method of each of Comparative Example 5, Example 1, and Example 2.
FIG. 11 is a table showing values of the compressive residual stress imparted by the laser processing method of each of Comparative Example 5, Example 1, and Example 2.
FIG. 12 is a plan view of an object for explaining a laser processing method of Modification Example 1.
FIG. 13 is a plan view of an object for explaining a laser processing method of Modification Example 2.

### Description of Embodiments

Hereinafter, an embodiment of the present disclosure will be described in detail with reference to the drawings. The same or corresponding parts in the drawings are denoted with the same reference signs, and repetitive description will be omitted.

### [Laser processing apparatus]

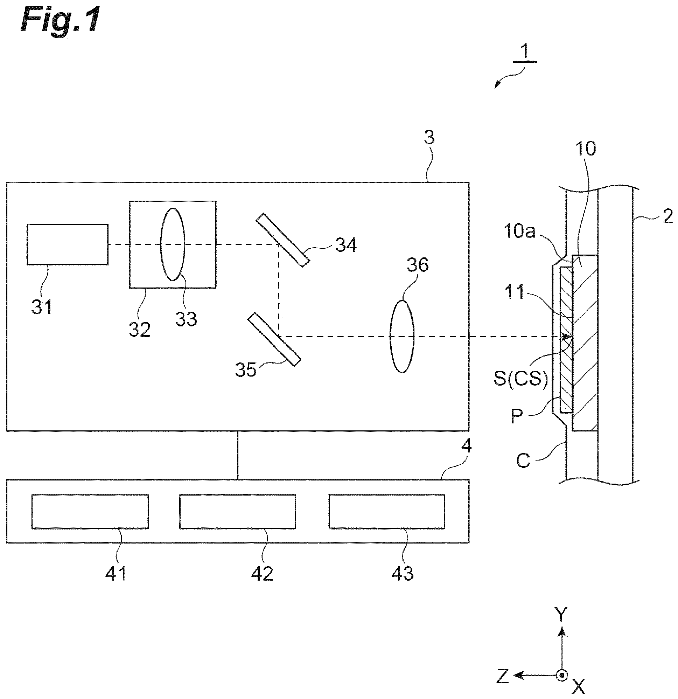

As shown in FIG. 1, a laser processing apparatus 1 includes a support part 2, an irradiation part 3, and a control part 4. The laser processing apparatus is a apparatus that irradiates an objective area 11 on a surface 10a of an object 10 with laser light L to impart compressive residual stress to the object 10 along the objective area 11. That is, the laser processing apparatus 1 is a apparatus for imparting compressive residual stress to an object 10 along an objective area 11 on a surface 10a of the object 10 by irradiating the objective area 11. In the following description, three directions orthogonal to each other are referred to as an X direction, a Y direction, and a Z direction. In the present embodiment, the Z direction is a first horizontal direction, the X direction is a second horizontal direction perpendicular to the first horizontal direction, and the Y direction is a vertical direction.

The support part 2 supports the object 10 such that the surface 10a of the object 10 is orthogonal to the Z direction. The support part 2 includes, for example, a clamp that clamps the object 10, a robot arm, and the like. The object 10 is, for example, a plate-shaped member made of a metal material such as copper, aluminum, iron, or titanium. A protective layer P is formed on the objective area 11 when the laser peening processing is performed. A confinement layer C is formed on a surface of the protective layer P. The protective layer P is a layer that absorbs heat generated by the irradiation of the objective area 11 with the laser light L in order to protect the objective area 11 from the heat. The protective layer P is, for example, a metal or resin layer. The confinement layer C is a layer that confines plasma generated by the irradiation of the objective area 11 with the laser light L in order to give an impact of the plasma to the object 10. The confinement layer C is, for example, water supplied in order to cover the protective layer P.

The irradiation part 3 irradiates the objective area 11 on the surface 10a of the object 10 supported by the support part 2 with the laser light L. The irradiation part 3 two-dimensionally moves an irradiation spot S of the laser light L with respect to the objective area 11. The irradiation spot S of the laser light L is an irradiation region of the laser light L in the objective area 11. In the present embodiment, a convergence spot CS of the laser light L is positioned on the objective area 11. That is, in the present embodiment, the convergence spot CS of the laser light L becomes the irradiation spot S of the laser light L.

The irradiation part 3 has a light source 31, an optical axis adjusting part 32, an optical axis adjusting lens 33, an X-axis movable mirror 34, a Y-axis movable mirror 35, and an objective lens 36. The light source 31 emits the laser light L. The light source 31 is, for example, a semiconductor laser that emits the laser light L by a pulse oscillation method. The optical axis adjusting part 32 supports the optical axis adjusting lens 33. The optical axis adjusting part 32 moves the optical axis adjusting lens 33 in the Z direction to move the convergence spot CS in the Z direction. The X-axis movable mirror 34 adjusts an inclination of a mirror surface that reflects the laser light L to move the convergence spot CS in the X direction. The Y-axis movable mirror 35 adjusts an inclination of a mirror surface that reflects the laser light L to move the convergence spot CS in the Y direction. Each of the X-axis movable mirror 34 and the Y-axis movable mirror 35 is, for example, a galvanomirror. The objective lens 36 optically corrects a position of the convergence spot CS of the laser light L such that the convergence spot CS is positioned on a plane perpendicular to the Z direction. The objective lens 36 is, for example, an f·θ lens.

The control part 4 controls an operation of the irradiation part 3 such that the irradiation spot S moves in the objective area 11 along a predetermined trajectory. The control part 4 has, for example, a processing part 41, a storage part 42, and an input reception part 43. The processing part 41 is configured as a computer device including a processor, a memory, a storage, a communication device, and the like. In the processing part 41, the processor executes software (a program) read from the memory or the like and controls reading and writing of data in the memory and the storage, and communication of a communication device. The storage part 42 is a hard disk or the like and stores various types of data. The input reception part 43 is an interface that receives an input of various types of data from an operator. In the present embodiment, the input reception part 43 constitutes a graphical user interface (GUI).

### [Laser processing method]

A laser processing method executed in the laser processing apparatus 1 described above will be described. The laser processing method is a method in which the objective area 11 on the surface 10a of the object 10 is irradiated with the laser light L to impart the compressive residual stress to the object 10 along the objective area 11. That is, the laser processing method is a method in which the laser peening processing is performed on the objective area 11 on the surface 10a of the object 10. In the present embodiment, the control part 4 controls the irradiation part 3 to execute a first step, a second step, a third step, and a fourth step, which will be described below. As an example, in the first step, the second step, the third step, and the fourth step, an output of the laser light L and an area and a shape of the irradiation spot S are constant.

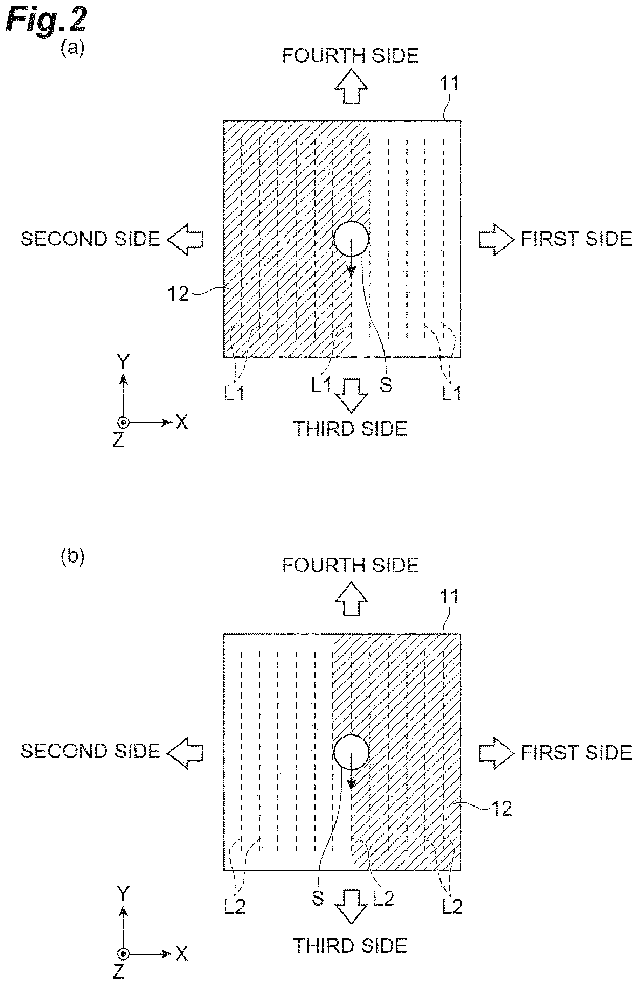

First, the object 10 is prepared. According to the present embodiment, in the laser processing apparatus 1, the object 10 is supported by the support part 2, and the objective area 11, irradiation conditions of the laser light L, and the like are set by the control part 4. In the present embodiment, as shown in (a) of FIG. 2, one side in the X direction (a first direction) is a first side, and the other side in the X direction is a second side. That is, the first side and the second side are sides opposite each other in the X direction. Further, one side in the Y direction (a second direction perpendicular to the first direction) is a third side, and the other side in the Y direction is a fourth side. That is, the third side and the fourth side are sides opposite each other in the Y direction. As an example, the objective area 11 is a rectangular area having two sides opposite each other in the X direction and two sides opposite each other in the Y direction.

Subsequently, in the objective area 11, an area 12 irradiated with the laser light L is expanded toward the first side (the first step), and the irradiated area 12 is expanded over all the objective area 11. Specifically, in the objective area 11, a first process of moving the irradiation spot S along each of a plurality of lines L1 extending in the Y direction and arranged at regular intervals in the X direction is sequentially executed from the second side to the first side to expand the irradiated area 12 toward the first side. In the present embodiment, as the first process, a process of moving the irradiation spot S from the third side to the fourth side (from one side to the other side in the second direction) and a process of moving the irradiation spot S from the fourth side to the third side (from the other side to the one side in the second direction) are alternately executed. The interval between the adjacent lines L1 is about 1/2 of the width of the irradiation spot S in the X direction.

Subsequently, as shown in (b) of FIG. 2, in the objective area 11, the area 12 irradiated with the laser light L is expanded toward the second side (the second step), and the irradiated area 12 is expanded over all the objective area 11 (that is, the irradiated area 12 is again expanded over all the objective area 11 to overlap the irradiated area 12 expanded over all the objective area 11 in the first step). Specifically, in the objective area 11, a second process of moving the irradiation spot S along each of a plurality of lines L2 extending in the Y direction and arranged at regular intervals in the X direction is sequentially executed from the first side to the second side to expand the irradiated area 12 toward the second side. In the present embodiment, as the second process, a process of moving the irradiation spot S from the third side to the fourth side and a process of moving the irradiation spot S from the fourth side to the third side are alternately executed. The interval between the adjacent lines L2 is about 1/2 of the width of the irradiation spot S in the X direction. In the present embodiment, the lines L2 match the lines L1.

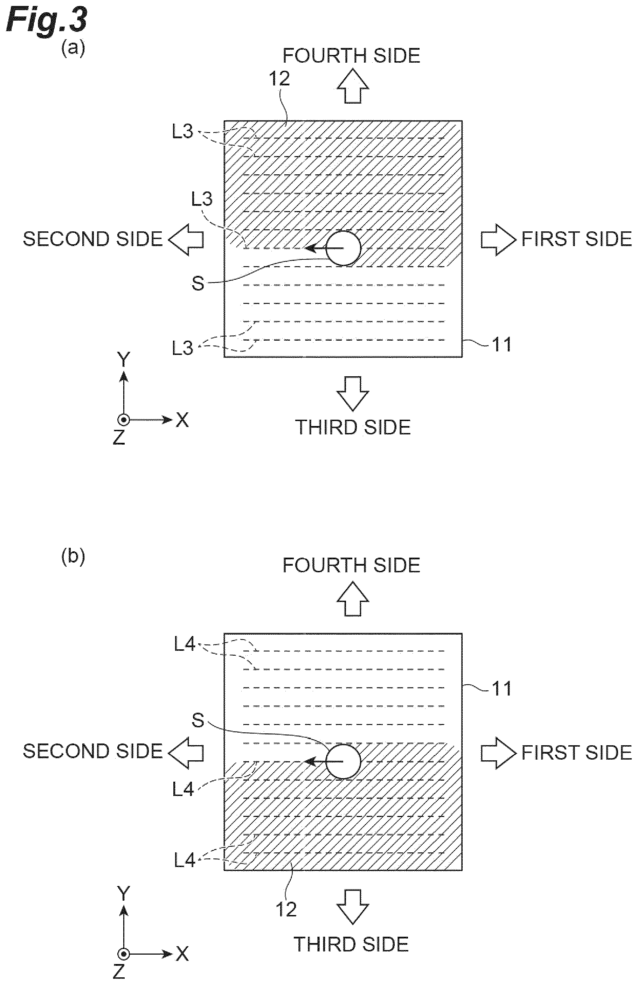

Subsequently, as shown in (a) of FIG. 3, in the objective area 11, the area 12 irradiated with the laser light L is expanded toward the third side (the third step), and the irradiated area 12 is expanded over all the objective area 11 (that is, the irradiated area 12 is again expanded over all the objective area 11 to overlap the irradiated area 12 expanded over all the objective area 11 in each of the first step and the second step). Specifically, in the objective area 11, a third process of moving the irradiation spot S along each of a plurality of lines L3 extending in the X direction and arranged at regular intervals in the Y direction is sequentially executed from the fourth side to the third side to expand the irradiated area 12 toward the third side. In the present embodiment, as the third process, a process of moving the irradiation spot S from the second side to the first side (from one side to the other side in the first direction) and a process of moving the irradiation spot S from the first side to the second side (from the other side to the one side in the first direction) are alternately executed. The interval between the adjacent lines L3 is about 1/2 of the width of the irradiation spot S in the Y direction.

Subsequently, as shown in (b) of FIG. 3, in the objective area 11, the area 12 irradiated with the laser light L is expanded toward the fourth side (the fourth step), and the irradiated area 12 is expanded over all the objective area 11 (that is, the irradiated area 12 is again expanded over all the objective area 11 to overlap the irradiated area 12 expanded over all the objective area 11 in each of the first step, the second step, and the third step). Specifically, in the objective area 11, a fourth process of moving the irradiation spot S along each of a plurality of lines L4 extending in the X direction and arranged at regular intervals in the Y direction is sequentially executed from the third side to the fourth side to expand the irradiated area 12 toward the fourth side. In the present embodiment, as the fourth process, a process of moving the irradiation spot S from the second side to the first side and a process of moving the irradiation spot S from the first side to the second side are alternately executed. The interval between the adjacent lines L4 is about 1/2 of the width of the irradiation spot S in the Y direction. In the present embodiment, the lines L4 match the lines L3.

As described above, by executing the first step, the second step, the third step, and the fourth step, the compressive residual stress is imparted to the object 10 along the objective area 11. In other words, the above laser processing method is a method for manufacturing the object to which the compressive residual stress is imparted along the objective area 11. In the above laser processing method, the irradiation with the laser light L only has to be executed such that "at least a portion of the irradiated area 12 expanded in the first step," "at least a portion of the irradiated area 12 expanded in the second step," "at least a portion of the irradiated area 12 expanded in the third step," and "at least a portion of the irradiated area 12 expanded in the fourth step" overlap each other in the objective area 11. In other words, in the above laser processing method, an area in which the irradiation with the laser light L is executed such that "at least a portion of the irradiated area 12 expanded in the first step," "at least a portion of the irradiated area 12 expanded in the second step," "at least a portion of the irradiated area 12 expanded in the third step," and "at least a portion of the irradiated area 12 expanded in the fourth step" overlap each other is the objective area 11.

### [Operation and effect]

In the above laser processing method, in the first step, the area 12 irradiated with the laser light L is expanded toward the first side, and in the second step, the area 12 irradiated with the laser light L is expanded toward the second side. Accordingly, the compressive residual stress imparted to the object 10 in the first step decreases toward the first side, and the compressive residual stress imparted to the object 10 in the second step decreases toward the second side. Furthermore, in the third step, the area 12 irradiated with the laser light L is expanded toward the third side, and in the fourth step, the area 12 irradiated with the laser light L is expanded toward the fourth side. Accordingly, the compressive residual stress imparted to the object 10 in the third step decreases toward the third side, and the compressive residual stress imparted to the object 10 in the fourth step decreases toward the fourth side. Therefore, variation in the compressive residual stress imparted to the object 10 is curbed as compared with a case where the area 12 irradiated with the laser light L is expanded toward the first side in each of the first step, the second step, the third step, and the fourth step, for example. Therefore, according to the above laser processing method, it is possible to curb the variation in the compressive residual stress imparted to the object 10 along the objective area 11 on the surface 10a of the object 10.

In the above laser processing method, the first side and the second side are sides opposite each other in the X direction, and the third side and the fourth side are sides opposite each other in the Y direction. Accordingly, it is possible to more reliably curb the variation in the compressive residual stress imparted to the object 10.

In the above laser processing method, in the first step, the first process of moving the irradiation spot S of the laser light L along each of the plurality of lines L1 extending in the Y direction and arranged in the X direction is sequentially executed from the second side to the first side to expand the area 12 irradiated with the laser light L toward the first side. Accordingly, in the first step, the area 12 irradiated with the laser light L can be reliably and easily expanded toward the first side. In the above laser processing method, in the second step, the second process of moving the irradiation spot S of the laser light L along each of the plurality of lines L2 extending in the Y direction and arranged in the X direction is sequentially executed from the first side to the second side to expand the area 12 irradiated with the laser light L toward the second side. Accordingly, in the second step, the area 12 irradiated with the laser light L can be reliably and easily expanded toward the second side different from the first side.

In the above laser processing method, in the first step, as the first process, the process of moving the irradiation spot S of the laser light L from one side to the other side in the Y direction and the process of moving the irradiation spot S of the laser light L from the other side to the one side in the Y direction are alternately executed. Accordingly, in the first step, the area 12 irradiated with the laser light L can be efficiently expanded toward the first side. In the above laser processing method, in the second step, as the second process, the process of moving the irradiation spot S of the laser light L from one side to the other side in the Y direction and the process of moving the irradiation spot S of the laser light L from the other side to the one side in the Y direction are alternately executed. Accordingly, in the second step, the area 12 irradiated with the laser light L can be efficiently expanded toward the second side different from the first side.

In the above laser processing method, in the third step, the third process of moving the irradiation spot S of the laser light L along each of the plurality of lines L3 extending in the X direction and arranged in the Y direction is sequentially executed from the fourth side to the third side to expand the area 12 irradiated with the laser light L toward the third side. Accordingly, in the third step, the area 12 irradiated with the laser light L can be reliably and easily expanded toward the third side. In the above laser processing method, in the fourth step, the fourth process of moving the irradiation spot S of the laser light L along each of the plurality of lines L4 extending in the X direction and arranged in the Y direction is sequentially executed from the third side to the fourth side to expand the area 12 irradiated with the laser light L toward the fourth side. Accordingly, in the fourth step, the area 12 irradiated with the laser light L can be reliably and easily expanded toward the fourth side different from the third side.

In the above laser processing method, in the third step, as the third process, the process of moving the irradiation spot S of the laser light L from one side to the other side in the X direction and the process of moving the irradiation spot S of the laser light L from the other side to the one side in the X direction are alternately executed. Accordingly, in the third step, the area 12 irradiated with the laser light L can be efficiently expanded toward the third side. In the above laser processing method, in the fourth step, as the fourth process, the process of moving the irradiation spot S of the laser light L from one side to the other side in the X direction and the process of moving the irradiation spot S of the laser light L from the other side to the one side in the X direction are alternately executed. Accordingly, in the fourth step, the area 12 irradiated with the laser light L can be efficiently expanded toward the fourth side different from the third side.

According to the above laser processing apparatus 1, as in the laser processing method described above, it is possible to curb the variation in the compressive residual stress imparted to the object 10 along the objective area 11 on the surface 10a of the object 10.

### [Comparative Examples and Examples]

First, laser processing methods of Comparative Example 1, Comparative Example 2, Comparative Example 3, and Comparative Example 4 will be described. Irradiation conditions of the laser light in the laser processing methods of Comparative Example 1, Comparative Example 2, Comparative Example 3, and Comparative Example 4 are as follows.
Irradiation conditions of laser light
   Wavelength: 1053 nm
   Pulse energy: 300 mJ
   Pulse width: 10 ns (rectangular)
   Converged light size: about 0.8 × 0.8 mm
   Intensity: 4.7 GW/cm²
   Repetition frequency: 2 Hz
Conditions of object
   Material: aluminum alloy (A2024)
   Shape: 49 × 49 mm
   Thickness: 3 mm
   Objective area: 2 × 10 mm
   Protective layer: resin tape (thickness: 100 µm or less)
   Confinement layer: flowing water

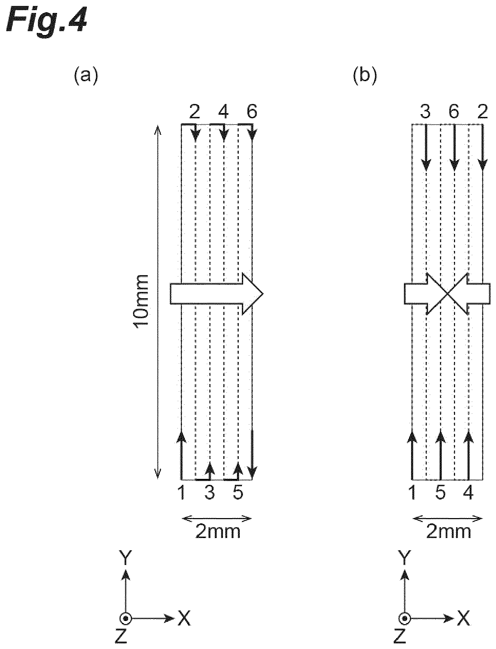

In the laser processing method of Comparative Example 1, as shown in (a) of FIG. 4, in the objective area, a process of moving the irradiation spot of the laser light along each of six lines (lines each indicated by a broken line) extending in the Y direction and arranged in the X direction was sequentially executed from one side to the other side in the X direction to expand the area irradiated with the laser light from the one side toward the other side in the X direction (a laser light irradiation step). In the laser processing method of Comparative Example 1, the laser light irradiation step was executed four times. In (a) of FIG. 4, a number attached to each line indicates an order in which the irradiation spot of the laser light is moved along the line, and an arrow attached to each line indicates a direction in which the irradiation spot of the laser light is moved along the line.

In the laser processing method of Comparative Example 2, as shown in (b) of FIG. 4, in the objective area, a process of moving the irradiation spot of the laser light along each of six lines (lines each indicated by a broken line) extending in the Y direction and arranged in the X direction was executed in the following order. That is, the process was executed in an order of a first line from one side in the X direction, a sixth line from the one side, a second line from the one side, a fifth line from the one side, a third line from the one side, and a fourth line from the one side. In the laser processing method of Comparative Example 2, the process was executed four times. In (b) of FIG. 4, a number attached to each line indicates an order in which the irradiation spot of the laser light is moved along the line, and an arrow attached to each line indicates a direction in which the irradiation spot of the laser light is moved along the line.

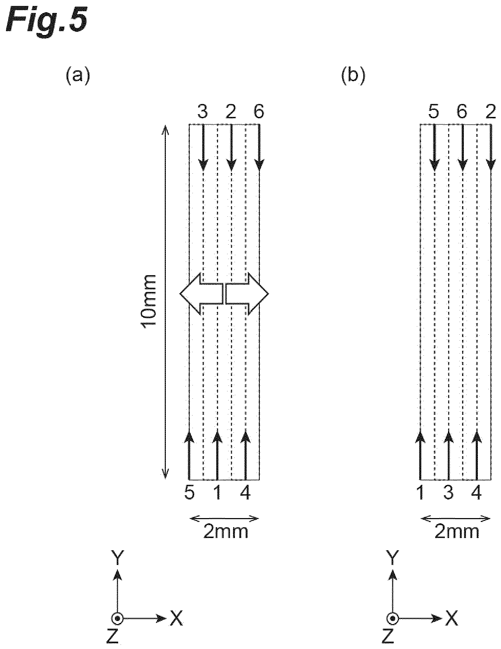

In the laser processing method of Comparative Example 3, as shown in (a) of FIG. 5, in the objective area, a process of moving the irradiation spot of the laser light along each of six lines (lines each indicated by a broken line) extending in the Y direction and arranged in the X direction was executed in the following order. That is, the process was executed in an order of a third line from one side in the X direction, a fourth line from the one side, a second line from the one side, a fifth line from the one side, a first line from the one side, and a sixth line from the one side. In the laser processing method of Comparative Example 3, the process was executed four times. In (a) of FIG. 5, a number attached to each line indicates an order in which the irradiation spot of the laser light is moved along the line, and an arrow attached to each line indicates a direction in which the irradiation spot of the laser light is moved along the line.

In the laser processing method of Comparative Example 4, as shown in (b) of FIG. 5, in the objective area, a process of moving the irradiation spot of the laser light along each of six lines (lines each indicated by a broken line) extending in the Y direction and arranged in the X direction was executed in the following order. That is, the process was executed in an order of a first line from one side in the X direction, a sixth line from the one side, a third line from the one side, a fifth line from the one side, a second line from the one side, and a fourth line from the one side. In the laser processing method of Comparative Example 4, the process was executed four times. In FIG. (b) of 5, a number attached to each line indicates an order in which the irradiation spot of the laser light is moved along the line, and an arrow attached to each line indicates a direction in which the irradiation spot of the laser light is moved along the line.

A two-dimensional distribution of compressive residual stress imparted by the laser processing method of each of Comparative Example 1, Comparative Example 2, Comparative Example 3, and Comparative Example 4 was measured by an X-ray residual stress measurement apparatus. The conditions for measuring the two-dimensional distribution of the compressive residual stress are as follows.
Conditions for measuring two-dimensional distribution of compressive residual stress
X-ray size: φ 0.5 mm
Measuring range: 3 × 4 mm
Interval: 0.25 mm
Tube: Co

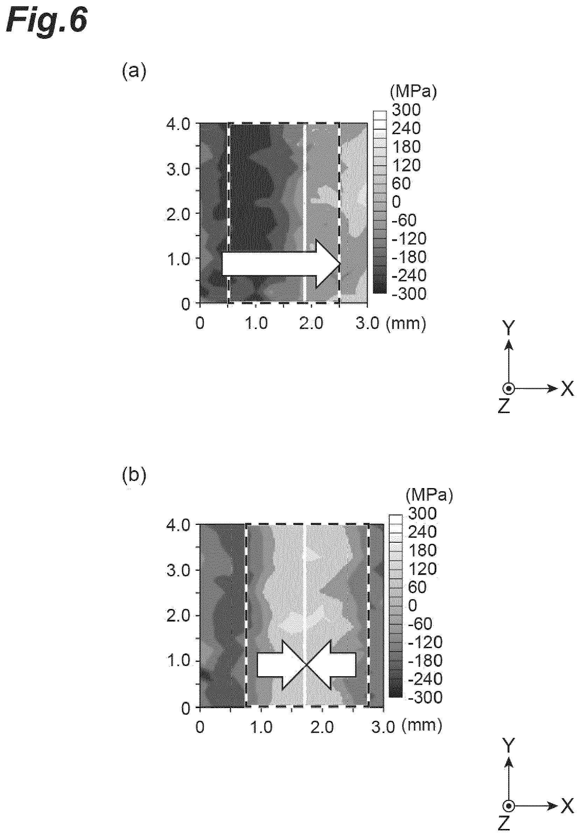

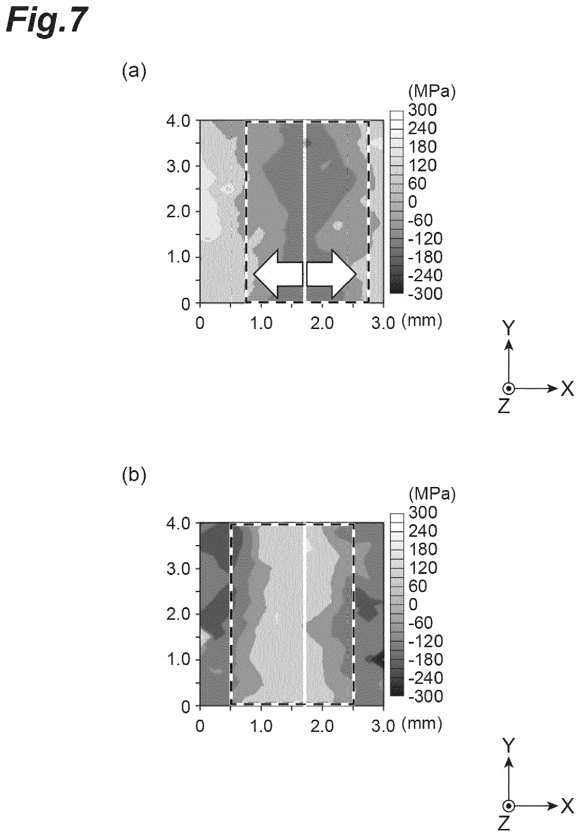

In the two-dimensional distribution of the compressive residual stress imparted by the laser processing method of Comparative Example 1, the compressive residual stress decreases from one side to the other side in the X direction, as shown in (a) of FIG. 6. In (a) of FIG. 6, the compressive residual stress is indicated by a negative value (the same applies to (b) of FIG. 6, and (a) and (b) of FIG.7, which will be described later).

In the two-dimensional distribution of the compressive residual stress imparted by the laser processing method of Comparative Example 2, the compressive residual stress decreases from one side to the other side in the X direction in a half area of the objective area on the one side in the X direction, as shown in (b) of FIG. 6. On the other hand, in the two-dimensional distribution, the compressive residual stress decreases from the other side to the one side in the X direction in a half area of the objective area on the other side in the X direction.

In the two-dimensional distribution of the compressive residual stress imparted by the laser processing method of Comparative Example 3, the compressive residual stress decreases from the other side to one side in the X direction in a half area of the objective area on the one side in the X direction, as shown in (a) of FIG. 7. On the other hand, in the two-dimensional distribution, the compressive residual stress decreases from the one side to the other side in the X direction in a half area of the objective area on the other side in the X direction.

In the two-dimensional distribution of the compressive residual stress imparted by the laser processing method of Comparative Example 4, the compressive residual stress decreases from one side to the other side in the X direction in a half area of the objective area on the one side in the X direction, as shown in (b) of FIG. 7. On the other hand, in the two-dimensional distribution, the compressive residual stress decreases from the other side to the one side in the X direction in a half area of the objective area on the other side in the X direction.

From the above results, it was demonstrated that the compressive residual stress imparted to the object decreases toward the side on which the area irradiated with the laser light expands in the objective area. Further, it was demonstrated that the distribution of the compressive residual stress imparted to the object varies even if the area irradiated with the laser light expands randomly from a sparse state to a dense state in the objective area.

Next, laser processing methods of Comparative Example 5, Example 1, and Example 2 will be described. Irradiation conditions of the laser light in the laser processing methods of Comparative Example 5, Example 1, and Example 2 are as follows.
Irradiation conditions of laser light
   Wavelength: 1064 nm
   Pulse energy: 42 mJ
   Pulse width: 39.4 ns (Gaussian)
   Converged light size: φ 0.19 mm
   Intensity: 3.8 GW/cm²
   Repetition frequency: 300 Hz
Conditions of object
   Material: aluminum alloy (A2024)
   Shape: 49 × 49 mm
   Thickness: 3 mm
   Objective area: 3 × 3 mm
   Protective layer: aluminum tape (thickness: 100 µm or less)
   Confinement layer: flowing water

In the laser processing method of Comparative Example 5, a step of expanding the area irradiated with the laser light from one side toward the other side in the X direction in the objective area (a step corresponding to the first step in the laser processing method of the above embodiment) was executed four times.

In the laser processing method of Example 1, a step of expanding the area irradiated with the laser light from one side toward the other side in the X direction in the objective area (a step corresponding to the first step in the laser processing method of the above embodiment) and a step of expanding the area irradiated with the laser light from the other side toward the one side in the X direction in the objective area (a step corresponding to the second step in the laser processing method of the above embodiment) were alternately executed two times.

In the laser processing method of Example 2, a step of expanding the area irradiated with the laser light from one side toward the other side in the X direction in the objective area (a step corresponding to the first step in the laser processing method of the above embodiment), a step of expanding the area irradiated with the laser light from the other side toward the one side in the X direction in the objective area (a step corresponding to the second step in the laser processing method of the above embodiment), a step of expanding the area irradiated with the laser light from one side toward the other side in the Y direction in the objective area (a step corresponding to the third step in the laser processing method of the above embodiment), and a step of expanding the area irradiated with the laser light from the other side toward the one side in the Y direction in the objective area (a step corresponding to the fourth step in the laser processing method of the above embodiment) were executed one time in that order.

A two-dimensional distribution of compressive residual stress imparted by the laser processing method of each of Comparative Example 5, Example 1, and Example 2 was measured by an X-ray residual stress measurement apparatus. The conditions for measuring the two-dimensional distribution of the compressive residual stress are as follows. Conditions for measuring two-dimensional distribution of compressive residual stress
X-ray size: φ 0.5 mm
Measuring range: 5.0 × 2.5 mm
Interval: 0.25 mm
Tube: Co

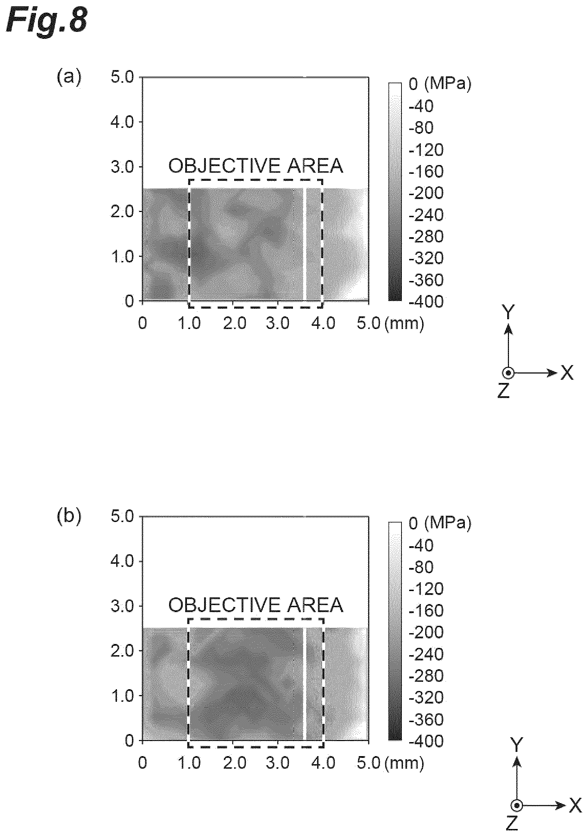

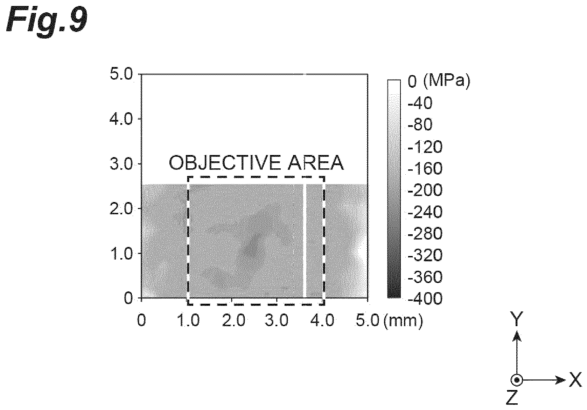

In the two-dimensional distribution of the compressive residual stress imparted along the objective area by the laser processing method of Comparative Example 5, the compressive residual stress decreases from one side to the other side in the X direction, as shown in (a) of FIG. 8. In the two-dimensional distribution of the compressive residual stress imparted along the objective area by the laser processing method of Example 1, the variation is curbed as compared with the two-dimensional distribution of the compressive residual stress imparted by the laser processing method of Comparative Example 5, as shown in (b) of FIG. 8. In the two-dimensional distribution of the compressive residual stress imparted along the objective area by the laser processing method of Example 2, the variation is curbed as compared with the two-dimensional distribution of the compressive residual stress imparted by the laser processing method of the Example 1, as shown in FIG. 9. In (a) and (b) of FIG.8, and FIG. 9, the compressive residual stress is indicated by a negative value.

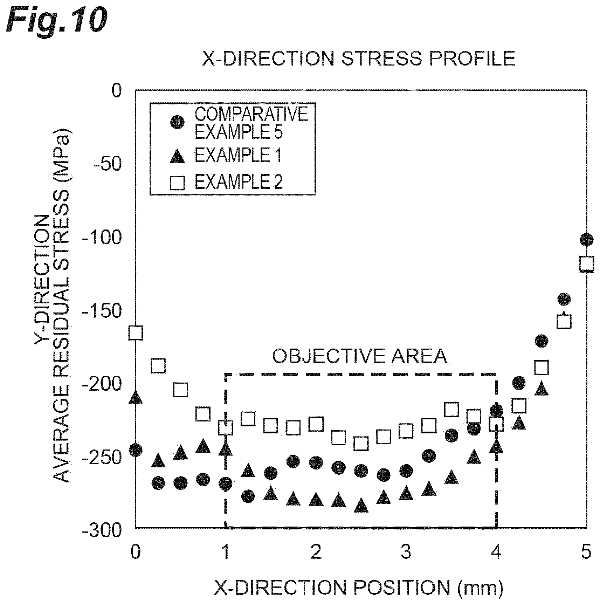

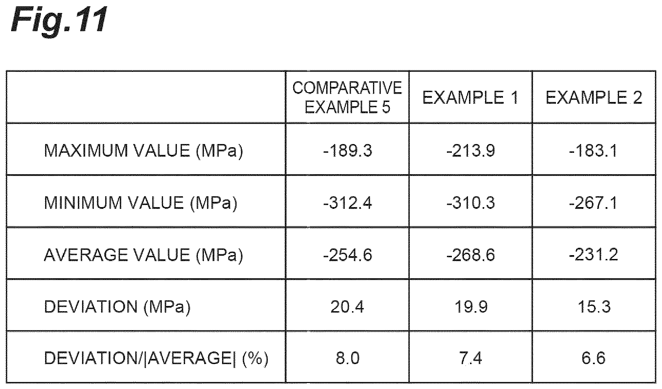

FIG. 10 is a graph showing the distribution of the compressive residual stress imparted by the laser processing method of each of Comparative Example 5, Example 1, and Example 2. In FIG. 10, an "X-direction position" is a position in the X direction, and a "Y-direction average residual stress" is an "average value of the compressive residual stresses imparted to a portion in the Y direction" at each X-direction position. As shown in FIG. 10, focusing on a difference between the maximum value and the minimum value of the Y-direction average residual stress in the objective area, in the difference, the value in the case of the laser processing method of Example 1 is smaller than the value in the case of the laser processing method of Comparative Example 5, and the value in the case of the laser processing method of Example 2 is smaller than the value in the case of the laser processing method of Example 1. In FIG. 10, the compressive residual stress is indicated by a negative value (the same applies to FIG. 11, which will be described later).

FIG. 11 is a table showing values of the compressive residual stress imparted by the laser processing method of each of Comparative Example 5, Example 1, and Example 2. In FIG. 11, the "maximum value" is the minimum value of the compressive residual stress imparted along the objective area (along a 3 × 3 mm dotted line frame) shown in each of (a) and (b) of FIG. 8, and FIG. 9, the "minimum value" is the maximum value of the compressive residual stress imparted along the objective area, and an "average value" is an average value of the compressive residual stresses imparted along the objective area. A "deviation" is a magnitude of the variation in the value of the compressive residual stress imparted along the objective area from the average value, and "deviation/|average|" is a proportion of the variation in the value of the compressive residual stress imparted along the objective area from the average value. As shown in FIG. 11, in the "deviation" and "deviation/|average|," the value in the case of the laser processing method of Example 1 is smaller than the value in the case of the laser processing method of Comparative Example 5, and the value in the case of the laser processing method of Example 2 is smaller than the value in the case of the laser processing method of Example 1. That is, the compressive residual stress imparted along the objective area in Example 1 is more uniform than the compressive residual stress imparted along the objective area in Comparative Example 5. Further, the compressive residual stress imparted along the objective area in Example 2 is more uniform than the compressive residual stress imparted along the objective area in Example 1.

### [Modification Examples]

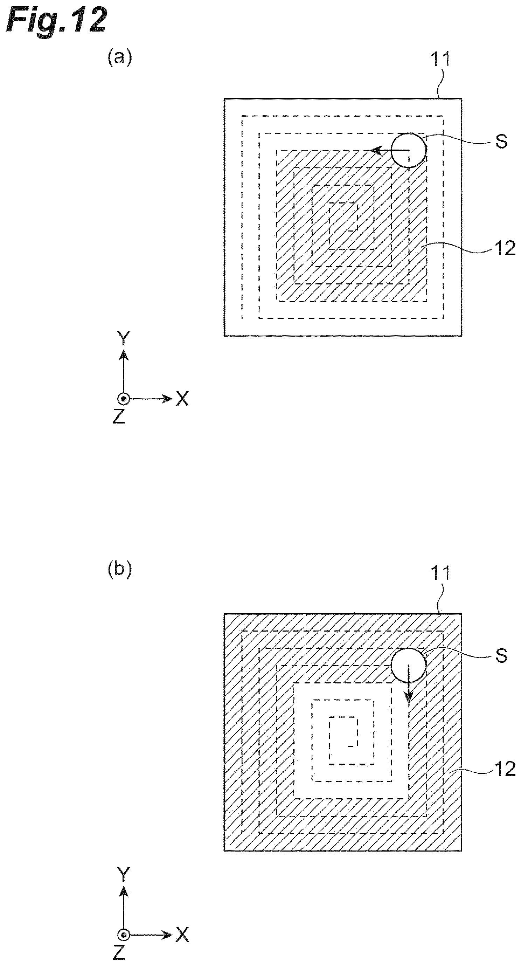

The present disclosure is not limited to the embodiment and the examples described above. A laser processing method of Modification Example 1 will be described. In the laser processing method of the Modification Example 1, as shown in (a) of FIG. 12, in the objective area 11, the area 12 irradiated with the laser light L is expanded toward an outward side (a first side) (a first step), and as shown in (b) of FIG. 12, in the objective area 11, the area 12 irradiated with the laser light L is expanded toward an inward side (a second side) (a second step). Specifically, in the first step, as shown in (a) of FIG. 12, the irradiation spot S of the laser light L is moved along a spiral line from a center of the objective area 11 to an outer edge of the objective area 11. In the second step, as shown in (b) of FIG. 12, the irradiation spot S of the laser light L is moved along the spiral line from the outer edge of the objective area 11 to the center of the objective area 11. The irradiation spot S of the laser light L may be moved along each of nested annular lines in the objective area 11. As an example, a process of moving the irradiation spot S along each of a plurality of annular lines is sequentially executed from an inward annular line toward an outward annular line to expand the area 12 irradiated with the laser light L toward the outward side in the objective area 11 (the first step). Subsequently, a process of moving the irradiation spot S along each of the plurality of annular lines is sequentially executed from the outward annular line toward the inward annular line to expand the area 12 irradiated with the laser light L toward the inward side in the objective area 11 (the second step). In the laser processing method of Modification Example 1, the steps are executed in the order of the first step and the second step, but the steps may be executed in the order of the second step and the first step.

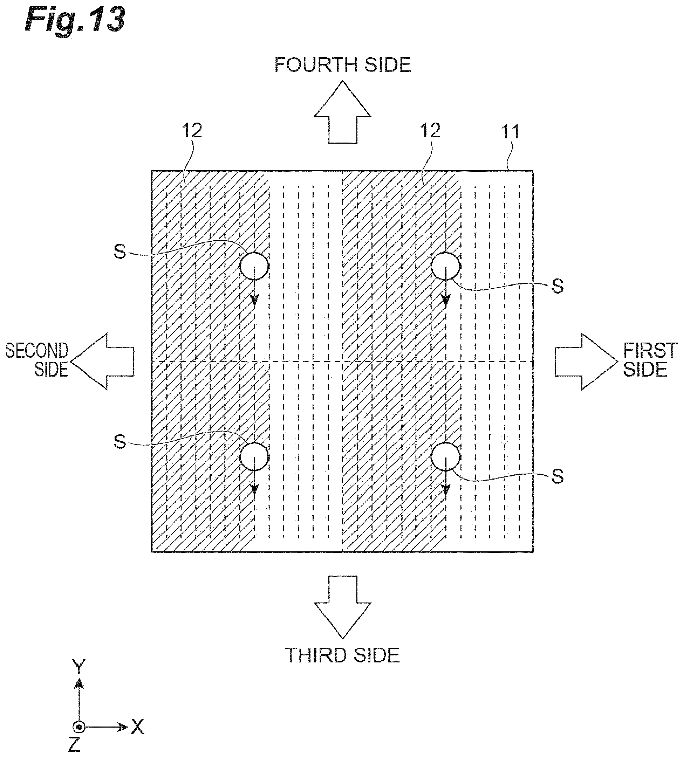

A laser processing method of Modification Example 2 will be described. In the laser processing method of Modification Example 2, the objective area 11 is divided into a plurality of areas, and the laser processing method of the above embodiment is executed in each of the plurality of areas. For example, as shown in FIG. 13, the objective area 11 is divided into four areas arranged in two rows and two columns in the X direction and the Y direction. By executing the laser processing method of the above embodiment in parallel in each of the four areas, it is possible to shorten the time for imparting the compressive residual stress to the object 10 along the objective area 11 even in a case where the objective area 11 is wide.

In the laser processing apparatus 1 of the above embodiment, the control part 4 controls the operation of the irradiation part 3 such that the irradiation spot S moves in the objective area 11 along the predetermined trajectory, but the control part 4 only has to control the operation of at least one of the support part 2 and the irradiation part 3. For example, the control part 4 may control the operation of the support part 2 such that the irradiation spot S moves in the objective area 11 along the predetermined trajectory. Alternatively, the control part 4 may control the operations of the support part 2 and the irradiation part 3 such that the irradiation spot S moves in the objective area 11 along the predetermined trajectory.

In the laser processing method of the above embodiment, in the first step and the second step, the process of moving the irradiation spot S from the third side to the fourth side and the process of moving the irradiation spot S from the fourth side to the third side are alternately executed, but in the first step and the second step, the process of moving the irradiation spot S from the third side to the fourth side and the process of moving the irradiation spot S from the fourth side to the third side may be performed consecutively.

In the laser processing method of the above embodiment, in the third step and the fourth step, the process of moving the irradiation spot S from the first side to the second side and the process of moving the irradiation spot S from the second side to the first side are alternately executed, but in the third step and the fourth step, the process of moving the irradiation spot S from the second side to the first side and the process of moving the irradiation spot S from the first side to the second side may be performed consecutively.

In the laser processing method of the above embodiment, the lines L2 match the lines L1, but, if the plurality of lines L2 extend in the Y direction and are arranged in the X direction, the lines L2 may not match the lines L1. Similarly, in the laser processing method of the above embodiment, the lines L4 match the lines L3, but, if the plurality of lines L4 extend in the X direction and are arranged in the Y direction, the lines L4 may not match the lines L3.

In the laser processing method of the above embodiment, the plurality of lines L1 are arranged at regular intervals, but the plurality of lines L1 may not be arranged at regular intervals. Similarly, in the laser processing method of the above embodiment, the plurality of lines L2 are arranged at regular intervals, but the plurality of lines L2 may not be arranged at regular intervals. Similarly, in the laser processing method of the above embodiment, the plurality of lines L3 are arranged at regular intervals, but the plurality of lines L3 may not be arranged at regular intervals. Similarly, in the laser processing method of the above embodiment, the plurality of lines L4 are arranged at regular intervals, but the plurality of lines L4 may not be arranged at regular intervals.

In the laser processing method of the above embodiment, the interval between the adjacent lines L1 is about 1/2 of the width of the irradiation spot S in the X direction, but the interval between the adjacent lines L1 may be larger than 1/2 of the width of the irradiation spot S in the X direction. That is, there may be a region between the adjacent lines L1 that is not irradiated with the laser light L two times. The interval between the adjacent lines L1 is preferably smaller than 1/2 of the width of the irradiation spot S in the X direction. That is, a portion between the adjacent lines L1 is preferably irradiated with the laser light L two times or more. Furthermore, the interval between the adjacent lines L1 is preferably 1/2 of the width of the irradiation spot S in the X direction. That is, a portion between the adjacent lines L1 is preferably irradiated with the laser light L two times without overlapping. In this case, the irradiated area 12 uniformly irradiated with the laser light L can be expanded toward the first side.

Similarly, in the laser processing method of the above embodiment, the interval between the adjacent lines L2 is about 1/2 of the width of the irradiation spot S in the X direction, but the interval between the adjacent lines L2 may be larger than 1/2 of the width of the irradiation spot S in the X direction. That is, there may be a region between the adjacent lines L2 that is not irradiated with the laser light L two times. The interval between the adjacent lines L2 is preferably smaller than 1/2 of the width of the irradiation spot S in the X direction. That is, a portion between the adjacent lines L2 is preferably irradiated with the laser light L two times or more. Furthermore, the interval between the adjacent lines L2 is preferably 1/2 of the width of the irradiation spot S in the X direction. That is, a portion between the adjacent lines L2 is preferably irradiated with the laser light L two times without overlapping. In this case, the irradiated area 12 uniformly irradiated with the laser light L can be expanded toward the second side.

Similarly, in the laser processing method of the above embodiment, the interval between the adjacent lines L3 is about 1/2 of the width of the irradiation spot S in the Y direction, but the interval between the adjacent lines L3 may be larger than 1/2 of the width of the irradiation spot S in the Y direction. That is, there may be a region between the adjacent lines L3 that is not irradiated with the laser light L two times. The interval between the adjacent lines L3 is preferably smaller than 1/2 of the width of the irradiation spot S in the Y direction. That is, a portion between the adjacent lines L3 is preferably irradiated with the laser light L two times or more. Furthermore, the interval between the adjacent lines L3 is preferably 1/2 of the width of the irradiation spot S in the Y direction. That is, a portion between the adjacent lines L3 is preferably irradiated with the laser light L two times without overlapping. In this case, the irradiated area 12 uniformly irradiated with the laser light L can be expanded toward the third side.

Similarly, in the laser processing method of the above embodiment, the interval between the adjacent lines L4 is about 1/2 of the width of the irradiation spot S in the Y direction, but the interval between the adjacent lines L4 may be larger than 1/2 of the width of the irradiation spot S in the Y direction. That is, there may be a region between the adjacent lines L4 that is not irradiated with the laser light L two times. The interval between the adjacent lines L4 is preferably smaller than 1/2 of the width of the irradiation spot S in the Y direction. That is, a portion between the adjacent lines L4 is preferably irradiated with the laser light L two times or more. Furthermore, the interval between the adjacent lines L4 is preferably 1/2 of the width of the irradiation spot S in the Y direction. That is, a portion between the adjacent lines L4 is preferably irradiated with the laser light L two times without overlapping. In this case, the irradiated area 12 uniformly irradiated with the laser light L can be expanded toward the fourth side.

In the laser processing method of the above embodiment, the first process of moving the irradiation spot S of the laser light L along each of the plurality of lines L1 is sequentially executed from the second side to the first side, but in an embodiment not covered by the appended claims, the process may not be sequentially executed. For example, the first process may be executed from the second side to the first side while some lines among the plurality of lines L1 are skipped, and a process of moving the irradiation spot S of the laser light L along the skipped some lines may be executed after the first process. Similarly, in the laser processing method of the above embodiment, the second process of moving the irradiation spot S of the laser light L along each of the plurality of lines L2 is sequentially executed from the first side to the second side, but in an embodiment not covered by the appended claims, the process may not be sequentially executed. For example, the second process may be executed from the first side to the second side while some lines among the plurality of lines L2 are skipped, and a process of moving the irradiation spot S of the laser light L along the skipped some lines may be executed after the second process.

In the laser processing method of the above embodiment, the third process of moving the irradiation spot S of the laser light L along each of the plurality of lines L3 is sequentially executed from the fourth side to the third side, but the process may not be sequentially executed. For example, the third process may be executed from the fourth side to the third side while some lines among the plurality of lines L3 are skipped, and a process of moving the irradiation spot S of the laser light L along the skipped some lines may be executed after the third process. Similarly, in the laser processing method of the above embodiment, the fourth process of moving the irradiation spot S of the laser light L along each of the plurality of lines L4 is sequentially executed from the third side to the fourth side, but the process may not be sequentially executed. For example, the fourth process may be executed from the third side to the fourth side while some lines among the plurality of lines L4 are skipped, and a process of moving the irradiation spot S of the laser light L along the skipped some lines may be executed after the fourth process.

In the laser processing method of the above embodiment, the steps are executed in the order of the first step, the second step, the third step, and the fourth step, but the order of executing the steps may be changed. Specifically, the steps may be executed in the order of the first step, the third step, the second step, and the fourth step. Alternatively, the steps may be executed in the order of the first step, the third step, the fourth step, and the second step.

In the laser processing method of the above embodiment, the third step and the fourth step are executed, but at least the first step and the second step only have to be executed. Also in this case, since the area 12 irradiated with the laser light L can be expanded toward two different sides, it is possible to curb the variation in the compressive residual stress imparted to the object 10 along the objective area 11. In a case where only the first step and the second step are executed, the irradiation with the laser light L only has to be executed such that "at least a portion of the irradiated area 12 expanded in the first step" and "at least a portion of the irradiated area 12 expanded in the second step" overlap each other in the objective area 11. In other words, in a case where only the first step and the second step are executed, an area in which the irradiation with the laser light L is executed such that "at least a portion of the irradiated area 12 expanded in the first step" and "at least a portion of the irradiated area 12 expanded in the second step" overlap each other is the objective area 11.

In the laser processing method of the above embodiment, the first side and the second side are sides opposite each other in the X direction, but the first side and the second side only have to be sides opposite each other in a predetermined direction. Furthermore, the first side and the second side only have to be sides different from each other. If the first side and the second side are different from each other, it is possible to curb the variation in the compressive residual stress imparted to the object 10 in the first step and the second step as compared with the case where the area 12 irradiated with the laser light L is expanded toward the first side in the second step. In a case where each of the first side and the second side is represented by a vector having the same magnitude, an angle formed by a vector indicating the first side (that is, a vector directed to the first side) and a vector indicating the second side (that is, a vector directed to the second side) is preferably greater than 90 degrees and less than or equal to 180 degrees. That is, it is preferable that the vector indicating the first side and the vector indicating the second side have vector components opposite each other in a predetermined direction. In this case, it is possible to curb the variation in the compressive residual stress imparted to the object 10 along the objective area 11 in the predetermined direction. For reference, the case where the angle formed by the vector indicating the first side and the vector indicating the second side is 180 degrees is the case where the first side and the second side face each other.

In the laser processing method of the above embodiment, the third side and the fourth side are sides opposite each other in the Y direction, but the third side and the fourth side only have to be sides opposite each other in a predetermined direction. Furthermore, the third side and the fourth side only have to be sides different from each other. If the third side and the fourth side are different from each other, it is possible to curb the variation in the compressive residual stress imparted to the object 10 in the third step and the fourth step as compared with the case where the area 12 irradiated with the laser light L is expanded toward the third side in the fourth step. In a case where each of the third side and the fourth side is represented by a vector having the same magnitude, an angle formed by a vector indicating the third side (that is, a vector directed to the third side) and a vector indicating the fourth side (that is, a vector directed to the fourth side) is preferably greater than 90 degrees and less than or equal to 180 degrees. That is, it is preferable that the vector indicating the third side and the vector indicating the fourth side have vector components opposite each other in a predetermined direction. In this case, it is possible to curb the variation in the compressive residual stress imparted to the object 10 along the objective area 11 in the predetermined direction. For reference, the case where the angle formed by the vector indicating the third side and the vector indicating the fourth side is 180 degrees is the case where the third side and the fourth side face each other.

The objective area 11 is not limited to a flat surface and may be a curved surface. The objective area 11 is not limited to a rectangle and may have another shape such as a circle. Each of the line L1, the line L2, the line L3, and the line L4 is not limited to a straight line and may be a curved line.

### Reference Signs List

1 Laser processing apparatus
2 Support part
3 Irradiation part
4 Control part
10 Object
10a Surface
11 Objective area
12 Irradiated area
L Laser light
S Irradiation spot
L1, L2, L3, L4 Line

## Claims

1. A laser processing method for imparting compressive residual stress to an object (10) along an objective area (11) on a surface (10a) of the object (10) by irradiating the objective area (11) with laser light (L), the method comprising:
a first step of expanding an area irradiated with the laser light (L) toward a first side in the objective area (11); and
a second step of expanding the area irradiated with the laser light (L) toward a second side different from the first side in the objective area (11),
wherein the first side and the second side are sides opposite each other in a first direction,
**characterised in that**, in
the first step, a first process of moving an irradiation spot (S) of the laser light (L) along each of a plurality of lines extending in a second direction perpendicular to the first direction and arranged in the first direction is sequentially executed from the second side to the first side to expand the area irradiated with the laser light (L) toward the first side, and
**in that**, in the second step, a second process of moving the irradiation spot (S) of the laser light (L) along each of a plurality of lines extending in the second direction and arranged in the first direction is sequentially executed from the first side to the second side to expand the area irradiated with the laser light (L) toward the second side.

2. The laser processing method according to claim 1,
wherein, in the first step, as the first process, a process of moving the irradiation spot (S) of the laser light (L) from one side to the other side in the second direction and a process of moving the irradiation spot (S) of the laser light (L) from the other side to the one side in the second direction are alternately executed, and
wherein, in the second step, as the second process, a process of moving the irradiation spot (S) of the laser light (L) from the one side to the other side in the second direction and a process of moving the irradiation spot (S) of the laser light (L) from the other side to the one side in the second direction are alternately executed.

3. The laser processing method according to claim 1 or 2, further comprising:
a third step of expanding the area irradiated with the laser light (L) toward a third side in the objective area (11); and
a fourth step of expanding the area irradiated with the laser light (L) toward a fourth side different from the third side in the objective area (11),
wherein the third side and the fourth side are sides opposite each other in a second direction perpendicular to the first direction.

4. The laser processing method according to claim 3,
wherein, in the third step, a third process of moving the irradiation spot (S) of the laser light (L) along each of a plurality of lines extending in the first direction and arranged in the second direction is sequentially executed from the fourth side to the third side to expand the area irradiated with the laser light (L) toward the third side, and
wherein, in the fourth step, a fourth process of moving the irradiation spot (S) of the laser light (L) along each of a plurality of lines extending in the first direction and arranged in the second direction is sequentially executed from the third side to the fourth side to expand the area irradiated with the laser light (L) toward the fourth side.

5. The laser processing method according to claim 4,
wherein, in the third step, as the third process, a process of moving the irradiation spot (S) of the laser light (L) from one side to the other side in the first direction and a process of moving the irradiation spot (S) of the laser light (L) from the other side to the one side in the first direction are alternately executed, and
wherein, in the fourth step, as the fourth process, a process of moving the irradiation spot (S) of the laser light (L) from the one side to the other side in the first direction and a process of moving the irradiation spot (S) of the laser light (L) from the other side to the one side in the first direction are alternately executed.

6. A laser processing apparatus for imparting compressive residual stress to an object (10) along an objective area (11) on a surface (10a) of the object (10) by irradiating the objective area (11) with laser light (L), the apparatus comprising:
a support part (2) configured to support the object (10);
an irradiation part (3) configured to irradiate the objective area (11) with the laser light (L); and
a control part (4) configured to control an operation of at least one of the support part (2) and the irradiation part (3),
wherein the control part (4)
controls an operation of at least one of the support part (2) and the irradiation part (3) such that an area irradiated with the laser light (L) expands toward a first side in the objective area (11), and
controls an operation of at least one of the support part (2) and the irradiation part (3) such that the area irradiated with the laser light (L) expands toward a second side different from first side in the objective area (11),
wherein the first side and the second side are sides opposite each other in a first direction,
**characterised in that**
the control part controls an operation of at least one of the support part (2) and the irradiation part (3) such that
moving an irradiation spot (S) of the laser light (L) along each of a plurality of lines extending in a second direction perpendicular to the first direction and arranged in the first direction is sequentially executed from the second side to the first side to expand the area irradiated with the laser light (L) toward the first side, and
moving the irradiation spot (S) of the laser light (L) along each of a plurality of lines extending in the second direction and arranged in the first direction is sequentially executed from the first side to the second side to expand the area irradiated with the laser light (L) toward the second side.

## Patentansprüche

1. Laserbearbeitungsverfahren zum Einbringen von Druckeigenspannung in ein Objekt (10) entlang eines Zielbereichs (11) auf einer Oberfläche (10a) des Objekts (10) durch Bestrahlen des Zielbereichs (11) mit Laserlicht (L), wobei das Verfahren umfasst:
einen ersten Schritt des Erweiterns eines mit dem Laserlicht (L) bestrahlten Bereichs in Richtung einer ersten Seite in dem Zielbereich (11); und
einen zweiten Schritt des Erweiterns des mit dem Laserlicht (L) bestrahlten Bereichs in Richtung einer zweiten Seite, die sich von der ersten Seite in dem Zielbereich (11) unterscheidet,
wobei die erste Seite und die zweite Seite in einer ersten Richtung einander gegenüberliegende Seiten sind, **dadurch gekennzeichnet, dass**
im ersten Schritt ein erster Prozess eines sequenziellen Bewegens eines Bestrahlungspunkts (S) des Laserlichts (L) entlang jeder von mehreren Linien, die sich in einer zweiten Richtung senkrecht zu der ersten Richtung erstrecken und in der ersten Richtung angeordnet sind, von der zweiten Seite zu der ersten Seite ausgeführt wird, um den mit dem Laserlicht (L) bestrahlten Bereich in Richtung der ersten Seite zu erweitern, und
im zweiten Schritt ein zweiter Prozess eines sequenziellen Bewegens des Bestrahlungspunkts (S) des Laserlichts (L) entlang jeder von mehreren Linien, die sich in der zweiten Richtung erstrecken und in der ersten Richtung angeordnet sind, von der ersten Seite zu der zweiten Seite ausgeführt wird, um den mit dem Laserlicht (L) bestrahlten Bereich in Richtung der zweiten Seite zu erweitern.

2. Laserbearbeitungsverfahren nach Anspruch 1,
wobei im ersten Schritt als erster Prozess ein Prozess zum Bewegen des Bestrahlungspunkts (S) des Laserlichts (L) von einer Seite zu der anderen Seite in der zweiten Richtung und ein Prozess zum Bewegen des Bestrahlungspunkts (S) des Laserlichts (L) von der anderen Seite zu der einen Seite in der zweiten Richtung abwechselnd ausgeführt werden, und
wobei im zweiten Schritt als zweiter Prozess ein Prozess des Bewegens des Bestrahlungspunkts (S) des Laserlichts (L) von der einen Seite zu der anderen Seite in der zweiten Richtung und ein Prozess des Bewegens des Bestrahlungspunkts (S) des Laserlichts (L) von der anderen Seite zu der einen Seite in der zweiten Richtung abwechselnd ausgeführt werden.

3. Laserbearbeitungsverfahren nach Anspruch 1 oder 2, das ferner umfasst:
einen dritten Schritt des Erweiterns des mit dem Laserlicht (L) bestrahlten Bereichs in Richtung einer dritten Seite in dem Zielbereich (11); und
einen vierten Schritt des Erweiterns des mit dem Laserlicht (L) bestrahlten Bereichs in Richtung einer vierten Seite, die sich von der dritten Seite in dem Zielbereich (11) unterscheidet, wobei die dritte Seite und die vierte Seite Seiten sind, die einander in einer zweiten Richtung senkrecht zu der ersten Richtung gegenüberliegen.

4. Laserverfahren nach Anspruch 3,
wobei in dem dritten Schritt ein dritter Prozess eines sequenziellen Bewegens des Bestrahlungspunkts (S) des Laserlichts (L) entlang jeder von mehreren Linien, die sich in der ersten Richtung erstrecken und in der zweiten Richtung angeordnet sind, von der vierten Seite zu der dritten Seite ausgeführt wird, um den mit dem Laserlicht (L) bestrahlten Bereich in Richtung der dritten Seite zu erweitern, und
wobei im vierten Schritt ein vierter Prozess eines sequenziellen Bewegens des Bestrahlungspunkts (S) des Laserlichts (L) entlang jeder von mehreren Linien, die sich in der ersten Richtung erstrecken und in der zweiten Richtung angeordnet sind, von der dritten Seite zur vierten Seite ausgeführt wird, um den mit dem Laserlicht (L) bestrahlten Bereich in Richtung der vierten Seite zu erweitern.

5. Laserbearbeitungsverfahren nach Anspruch 4,
wobei im dritten Schritt als dritter Prozess ein Prozess zum Bewegen des Bestrahlungspunkts (S) des Laserlichts (L) von einer Seite zu der anderen Seite in der ersten Richtung und ein Prozess zum Bewegen des Bestrahlungspunkts (S) des Laserlichts (L) von der anderen Seite zu der einen Seite in der ersten Richtung abwechselnd ausgeführt werden, und
wobei im vierten Schritt als vierter Prozess ein Prozess des Bewegens des Bestrahlungspunkts (S) des Laserlichts (L) von der einen Seite zu der anderen Seite in der ersten Richtung und ein Prozess des Bewegens des Bestrahlungspunkts (S) des Laserlichts (L) von der anderen Seite zu der einen Seite in der ersten Richtung abwechselnd ausgeführt werden.

6. Laserbearbeitungsvorrichtung zum Einbringen von Druckeigenspannung in ein Objekt (10) entlang eines Zielbereichs (11) auf einer Oberfläche (10a) des Objekts (10) durch Bestrahlen des Zielbereichs (11) mit Laserlicht (L), wobei die Vorrichtung aufweist:
ein Halteteil (2), das zum Halten des Objekts (10) ausgebildet ist;
ein Bestrahlungsteil (3), das ausgebildet ist, den Zielbereich (11) mit dem Laserlicht (L) zu bestrahlen; und
ein Steuerungsteil (4), das ausgebildet ist, eine Funktionsweise des Halteteils (2) und/oder des Bestrahlungsteils (3) zu steuern,
wobei das Steuerungsteil (4)
die Funktionsweise des Halteteils (2) und/oder des Bestrahlungsteils (3) derart steuert, dass ein mit dem Laserlicht (L) bestrahlter Bereich in Richtung einer ersten Seite in dem Zielbereich (11) erweitert wird, und
die Funktionsweise des Halteteiles (2) und/oder des Bestrahlungsteils (3) derart steuert, dass der mit dem Laserlicht (L) bestrahlte Bereich in Richtung einer zweiten Seite, die sich von der ersten Seite in dem Zielbereich (11) unterscheidet, erweitert wird,
wobei die erste Seite und die zweite Seite einander in einer ersten Richtung gegenüberliegende Seiten sind,
**dadurch gekennzeichnet, dass**
das Steuerungsteil die Funktionsweise des Halteteils (2) und/oder des Bestrahlungsteils (3) derart steuert, dass
ein sequenzielles Bewegen eines Bestrahlungspunkts (S) des Laserlichts (L) entlang jeder von mehreren Linien, die sich in einer zweiten Richtung senkrecht zu der ersten Richtung erstrecken und in der ersten Richtung angeordnet sind, von der zweiten Seite zu der ersten Seite erfolgt, um den mit dem Laserlicht (L) bestrahlten Bereich zu der ersten Seite hin zu erweitern, und
ein sequenzielles Bewegen des Bestrahlungspunkts (S) des Laserlichts (L) entlang jeder von mehreren Linien, die sich in der zweiten Richtung erstrecken und in der ersten Richtung angeordnet sind, von der ersten Seite zu der zweiten Seite erfolgt, um den mit dem Laserlicht (L) bestrahlten Bereich zu der zweiten Seite hin zu erweitern.

## Revendications

1. Procédé de traitement laser pour appliquer une contrainte résiduelle de compression à un objet (10) le long d'une zone d'objectif (11) sur une surface (10a) de l'objet (10) par irradiation de la zone d'objectif (11) avec une lumière laser (L), le procédé comprenant :
une première étape d'extension d'une zone irradiée par la lumière laser (L) vers un premier côté dans la zone d'objectif (11) ; et
une deuxième étape d'extension de la zone irradiée par la lumière laser (L) vers un deuxième côté différent du premier côté dans la zone d'objectif (11),
dans lequel le premier côté et le deuxième côté sont des côtés opposés dans une première direction,
**caractérisé en ce que**, dans la première étape, un premier processus de déplacement d'un point d'irradiation (S) de la lumière laser (L) le long de chaque ligne d'une pluralité de lignes s'étendant dans une deuxième direction perpendiculaire à la première direction et agencées dans la première direction est exécuté séquentiellement depuis le deuxième côté vers le premier côté afin d'étendre la zone irradiée par la lumière laser (L) vers le premier côté, et
**en ce que**, dans la deuxième étape, un deuxième processus de déplacement du point d'irradiation (S) de la lumière laser (L) le long de chaque ligne d'une pluralité de lignes s'étendant dans la deuxième direction et agencées dans la première direction est exécuté séquentiellement depuis le premier côté vers le deuxième côté afin d'étendre la zone irradiée par la lumière laser (L) vers le deuxième côté.

2. Procédé de traitement laser selon la revendication 1,
dans lequel, dans la première étape, en tant que premier processus, un processus de déplacement du point d'irradiation (S) de la lumière laser (L) depuis un côté vers l'autre côté dans la deuxième direction et un processus de déplacement du point d'irradiation (S) de la lumière laser (L) depuis l'autre côté vers ledit un côté dans la deuxième direction sont exécutés alternativement, et
dans lequel, dans la deuxième étape, en tant que deuxième processus, un processus de déplacement du point d'irradiation (S) de la lumière laser (L) depuis ledit un côté vers l'autre côté dans la deuxième direction et un processus de déplacement du point d'irradiation (S) de la lumière laser (L) depuis l'autre côté vers ledit un côté dans la deuxième direction sont exécutés alternativement.

3. Procédé de traitement laser selon la revendication 1 ou 2, comprenant en outre :
une troisième étape d'extension de la zone irradiée par la lumière laser (L) vers un troisième côté dans la zone d'objectif (11) ; et
une quatrième étape d'extension de la zone irradiée par la lumière laser (L) vers un quatrième côté différent du troisième côté dans la zone d'objectif (11),
dans lequel le troisième côté et le quatrième côté sont des côtés opposés dans une deuxième direction perpendiculaire à la première direction.

4. Procédé de traitement laser selon la revendication 3,
dans lequel, dans la troisième étape, un troisième processus de déplacement du point d'irradiation (S) de la lumière laser (L) le long de chaque ligne d'une pluralité de lignes s'étendant dans la première direction et agencées dans la deuxième direction est exécuté séquentiellement depuis le quatrième côté vers le troisième côté afin d'étendre la zone irradiée par la lumière laser (L) vers le troisième côté, et
dans lequel, dans la quatrième étape, un quatrième processus de déplacement du point d'irradiation (S) de la lumière laser (L) le long de chaque ligne d'une pluralité de lignes s'étendant dans la première direction et agencées dans la deuxième direction est exécuté séquentiellement depuis le troisième côté vers le quatrième côté afin d'étendre la zone irradiée par la lumière laser (L) vers le quatrième côté.

5. Procédé de traitement laser selon la revendication 4,
dans lequel, dans la troisième étape, en tant que troisième procédé, un processus de déplacement du point d'irradiation (S) de la lumière laser (L) depuis un côté vers l'autre côté dans la première direction et un processus de déplacement du point d'irradiation (S) de la lumière laser (L) depuis l'autre côté vers ledit un côté dans la première direction sont exécutés alternativement, et
dans lequel, dans la quatrième étape, en tant que quatrième processus, un processus de déplacement du point d'irradiation (S) de la lumière laser (L) depuis ledit un côté vers l'autre côté dans la première direction et un processus de déplacement du point d'irradiation (S) de la lumière laser (L) depuis l'autre côté vers ledit un côté dans la première direction sont exécutés alternativement.

6. Appareil de traitement laser destiné à appliquer une contrainte résiduelle de compression à un objet (10) le long d'une zone d'objectif (11) sur une surface (10a) de l'objet (10) en irradiant la zone d'objectif (11) avec une lumière laser (L), l'appareil comprenant :
une partie de support (2) configurée pour supporter l'objet (10) ;
une partie d'irradiation (3) configurée pour irradier la zone d'objectif (11) avec la lumière laser (L) ; et
une partie de contrôle (4) configurée pour contrôler le fonctionnement d'au moins une partie parmi la partie de support (2) et la partie d'irradiation (3),
dans lequel la partie de contrôle (4)
contrôle le fonctionnement d'au moins une partie parmi la partie de support (2) et la partie d'irradiation (3) de sorte qu'une zone irradiée par la lumière laser (L) s'étende vers un premier côté dans la zone d'objectif (11), et
contrôle le fonctionnement d'au moins une partie parmi la partie de support (2) et la partie d'irradiation (3) de sorte que la zone irradiée par la lumière laser (L) s'étende vers un deuxième côté différent du premier côté dans la zone d'objectif (11),
dans lequel le premier côté et le deuxième côté sont des côtés opposés dans une première direction,
**caractérisé en ce que** la partie de contrôle contrôle le fonctionnement d'au moins une partie parmi la partie support (2) et la partie irradiation (3), de sorte que
le déplacement d'un point d'irradiation (S) de la lumière laser (L) le long de chaque ligne d'une pluralité de lignes s'étendant dans une deuxième direction perpendiculaire à la première direction et agencées dans la première direction est exécuté séquentiellement depuis le deuxième côté vers le premier côté afin d'étendre la zone irradiée par la lumière laser (L) vers le premier côté, et
le déplacement du point d'irradiation (S) de la lumière laser (L) le long de chaque ligne d'une pluralité de lignes s'étendant dans la deuxième direction et agencées dans la première direction est exécuté séquentiellement depuis le premier côté vers le deuxième côté afin d'étendre la zone irradiée par la lumière laser (L) vers le deuxième côté.
